# EUROPÄISCHE PATENTSCHRIFT

(11) **EP 0 584 639 B1**
(45) Veröffentlichungstag und Bekanntmachung des Hinweises auf die Patenterteilung: **29.10.1997**
(21) Anmeldenummer: 93112812.8
(22) Anmeldetag: 10.08.1993
(51) Int. Cl.: H01M 4/00, H01M 10/12, H01M 4/14

(54) **Bleiakkumulator**
Lead accumulator
Accumulateur au plomb

(30) Priorität: 10.08.1992 DE 4226428; 22.08.1992 DE 4227915
(43) Veröffentlichungstag der Anmeldung: 02.03.1994
(73) Patentinhaber: Messmer, Friedhelm, 79285 Hartheim (DE); Niggl, Gerd, D-79108 Freiburg (DE)
(72) Erfinder: Messmer, Friedhelm, 79285 Hartheim (DE); Niggl, Gerd, D-79108 Freiburg (DE)
(74) Vertreter: Schmitt, Hans, Dipl.-Ing.

(56) Entgegenhaltungen:
- DE-A- 3 040 018
- DE-C- 50 854
- FR-A- 1 115 429
- FR-A- 2 075 174
- FR-A- 2 644 012
- FR-E- 22 521
- PATENT ABSTRACTS OF JAPAN vol. 5, no. 15 (E-43)(687) 29. Januar 1981 & JP-A-55 143 775 (NIPPON DENCHI K.K.)
- PATENT ABSTRACTS OF JAPAN vol. 12, no. 423 (E-680)(3270) 9. November 1988 & JP-A-63 160 168 (MATSUSHITA ELECTRIC IND CO LTD)

## Beschreibung

Die Erfindung betrifft einen Bleiakkumulator mit einem Batteriegehäuse, welches in seinem Gehäuseinneren in mehrere Zellengefäße unterteilt ist, in denen jeweils wenigstens zwei voneinander separierte Elektroden vorgesehen sind, von denen mindestens eine an zumindest einer ihrer beiden Flachseiten mit aktivem Material beschichtet ist, wobei wenigstens eine der beschichteten Elektroden ein plattenförmiges ebenes Bleiblech als Stromableiter aufweist, welches zum Festlegen der Schichtdicke des aktiven Materials einen entsprechend erhöhten Seitenrand hat, und wobei die einem Zellengefäß zugeordneten Elektroden mittels einer an Druckkraft fest gegeneinander gepreßt sind, welche quer zu den Elektroden-Flachseiten wirkt und zum Aufbringen der Andruckkraft eine Spannvorrichtung vorgesehen ist.

Derartige Bleiakkumulatoren werden beispielsweise als Starterbatterien in Kraftfahrzeugen verwendet, um auch bei stehendem Motor dessen elektrische Anlage mit Strom zu versorgen. Vorbekannte Bleiakkumulatoren weisen meist ein Batteriegehäuse aus isolierendem und säurebeständigem Kunststoff oder Hartgummi auf, welches in seinem Gehäuseinneren in mehrere Zellengefäße unterteilt ist. Jede der in Reihenschaltung miteinander verbundenen Zellen hat mehrere positive und negative Elektroden, die durch isolierende, aber poröse Separatoren voneinander elektrisch getrennt sind. Diese Separatoren halten die in einem Plattenblock parallel geschalteten Elektroden der Zelle in gleichem Abstand voneinander, um einen Kurzschluß zu vermeiden.

Aus der FR-A-2 075 174 ist ein Bleiakkumulator der eingangs genannten Art bekannt, bei welchem die Spannvorrichtung die Form von vorgewölbten Blattfedern hat, die im Inneren der einzelnen Zellengefäße angeordnet sind. Somit muß das Batteriegehäuse gleichzeitig auch das Widerlager für die von diesen Blattfedern ausgehende Spann- und Andruckkraft bilden, ist also einer ständigen Expansionskraft ausgesetzt, was bei Beschädigungen unter Umständen sogar zum Aufsprengen des Batteriegehäuses führen kann.

Aus der DE-PS 292 157 ist bereits ein Bleiakkumulator bekannt, bei dem die Stromableiter der Elektroden als plattenförmige Bleibleche ausgebildet sind. Die Bleibleche dieser vorbekannten Speicherbatterie werden auf ihren Flachseiten durch sich überkreuzende Mittelrippen gitterförmig unterteilt, wobei diese Rippen durch das während eines Preßvorganges verdrängte Blei gebildet werden.

Durch die in DE-PS 292 157 vorgesehenen Mittelrippen entsteht im Mittelbereich der plattenförmigen Elektrode eine bevorzugte und in Längsrichtung der Mittelrippe orientierte Stromrichtung, die nicht in der Hauptstromrichtung liegt. Dadurch sind die Stromwege im Mittelrippenbereich dieses vorbekannten Bleiakkus länger als bei einem ebenen Bleiblech, was zu höheren Spannungsverlusten führt. Eine Spannvorrichtung mit entsprechender Andruckkraft ist dabei nicht vorgesehen.

Bei solchen plattenförmigen Elektrodenblechen traten zudem in der Vergangenheit meist schon nach wenigen Entladevorgängen sogenannte Abkoppel- oder Abtrenneffekte ein, bei denen sich zwischen dem leitenden Bleiblech und der auf das Blech flächig aufgetragenen aktiven Materialschicht eine Bleisulfatschicht als praktisch isolierende Schicht bildete. Diese immer dichter werdende Bleisulfatschicht trennt zunehmend die Stromableiteroberfläche des plattenförmigen Bleibleches von dem aktiven Massefeld ab.

Wegen dieses im wesentlichen nur bei plattenförmigen Bleielektroden auftretenden Abkoppeleffektes hat man seit längerem röhrchenförmige oder gitterförmige Elektrodenkonstruktionen bevorzugt. So kennt man beispielsweise aus der JP-55 95 273 sowie aus der JP-55 96 566 jeweils einen Bleiakkumulator, bei dem der Stromableiter der Elektroden als Hartbleigitter ausgebildet ist, in die die aktive Masse eingebracht wird. Diese aktive Masse wird gewöhnlich als Paste aus Bleioxid bzw. Bleipulver sowie Kunststoffasern, Bindemitteln und weiteren Zuschlagstoffen hergestellt und in die erwähnten Hartbleigitter eingepreßt.

Die an der Grenzfläche zwischen den Elektroden und dem Elektrolyt freiwerdenden Elektronen müssen bereits in der Elektrode mehrere Längswiderstände überwinden, die insbesondere bei den oben beschriebenen gitterförmigen Elektrodenkonstruktionen vergleichsweise hoch sind. Dabei treten vor allem bei einer Hochstromentladung erhebliche Spannungsverluste ein.

Aus der DE-PS 26 28 223 ist bereits ein Bleiakkumulator bekannt, bei dem der Stromableiter der Elektroden ebenfalls durch ein im wesentlichen plattenförmiges Bleiblech gebildet ist. Jeder der Stromableiter dieses vorbekannten Bleiakkus weist an seinen beiden Flachseiten eine im Querschnitt gewellte, zackenförmige oder abwechselnd aus Vertiefungen oder Erhöhungen gebildete Profilierung auf, die als aufgesetzte Gitterkonstruktion dient. Der Stromableiter ist zumindest in seinem profilierten Teilbereich von der aktiven Masse umschlossen und in einem äußeren gelochten Kunststoffgehäuse angeordnet. Wegen dieser, die Stromableiter umgebenden Kunststoffgehäuse weist der vorbekannte Bleiakku jedoch einen vergleichsweise hohen, elektrisch inaktiven Volumenanteil auf. Auch lassen sich die in DE-PS 26 28 223 beschriebenen Elektroden nur von Hand im Pastierkassettenverfahren fertigen, was einen erheblichen Herstellungsaufwand bedeutet. Vor allem aber besteht auch bei den in DE-PS 26 28 223 beschriebenen Elektroden unter Umständen die Gefahr, daß sich bereits nach wenigen Entladezyklen ebenfalls die oben beschriebenen Abtrenneffekte zwischen den Stromableiterplatten der Elektroden und dem aktiven Massenfeld einstellen.

Es besteht deshalb die Aufgabe, einen Bleiakkumulator der eingangs erwähnten Art zu schaffen, dessen Elektroden sich durch eine hohe elektrische Güte und eine lange Lebensdauer auszeichnen und die dennoch mit vergleichsweise geringem Aufwand herzustellen sind, wobei eine Andruckkraft wirksam gemacht werden soll, ohne das Batteriegehäuse einer ständigen Expansionskraft auszusetzen.

Zur Lösung dieser Aufgabe ist der Bleiakkumulator der eingangs erwähnten Art mit Spannvorrichtung dadurch gekennzeichnet, daß die Spannvorrichtung wenigstens ein Spannband hat, das das Batteriegehäuse außenseitig umgreift.

Dieses Spannband übt eine von außen auf die Plattenblöcke einwirkende Andruckkraft aus, vermeidet also eine im Inneren der Zellengefäße wirksam werdende Expansionskraft. Gleichzeitig bleibt bei dem dadurch insgesamt gebildeten Bleiakkumulator der Vorteil erhalten, daß der Stromableiter bei den Elektroden im Gegensatz zu vorbekannten Elektroden-Konstruktionen keine Mittelrippen aufzuweisen braucht, sondern vielmehr als plattenförmiges ebenes Bleiblech ausgebildet sein kann.

Die Elektroden des erfindungsgemäßen Bleiakkus weisen an ihren Stromableiterblechen randseitig lediglich einen umlaufenden Seitenrand auf, welcher zum Festlegen der Schichtdicke des aus Bleidioxid bestehenden aktiven Materials entsprechend erhöht ist. Durch diesen erhöhten Seitenrand, der bereits beim Blechgießvorgang in das Stromableiterblech miteingeformt werden kann, kann auf eine zusätzliche Montage von Kunststoffrähmchen oder Kunststoffgehäuse verzichtet werden. Die Elektroden des erfindungsgemäßen Bleiakkus sind somit vergleichsweise einfach herzustellen und können mit geringem Aufwand auch auf automatischen Pastiermaschinen mit dem aktiven Schichtmaterial überzogen werden. Da bei dem erfindungsgemäßen Bleiakkumulator die Elektroden keine Mittelrippen aufweisen, kann vor allem das Gewicht der Stromableiter vermindert, daß Volumen des inaktiven Leitbleis reduziert und statt dessen wesentlich mehr aktives Material auf die plattenförmigen Elektroden aufgetragen werden. Da bei der erfindungsgemäßen Speicherbatterie auf die üblichen Mittelrippen verzichtet wird und auf das ebene Elektrodenblech statt dessen mehr aktives Material aufgetragen werden kann, weist der erfindungsgemäße Bleiakku bei gleichem Plattenformat und gleicher Plattendicke eine höhere Stromkapazität auf. Durch die ansonsten ebene Ausgestaltung der Elektroden sind kurze Säurediffusionswege möglich, was die Hochstromkapazität des erfindungsgemäßen Bleiakkus begünstigt.

Dem bei plattenförmigen Elektrodenkonstruktionen ansonsten üblichen Abkoppeleffekt wird erfindungsgemäß dadurch entgegengewirkt, daß die den Zellengefäßen jeweils zugeordneten Elektroden mittels der durch das außenseitig angreifende Spannband erzeugten Andruckkraft fest gegeneinander verpreßt sind, welche quer und vorzugsweise rechtwinklig zu den Elektroden-Flachseiten wirkt. Diese hohe und quer zu den Elektroden-Flachseiten wirksame Andruckkraft bewirkt, daß die einem Zellengefäß zugeordneten Elektroden zusammen mit der zwischen ihnen erforderlichen Separation jeweils einen strammen Plattenblock in den entsprechenden Zellengefäßen des Batteriegehäuses bilden. Die auf die Elektroden ausgeübte Andruckkraft wirkt einer übermäßigen und den Abkoppeleffekt begünstigenden Ausdehnung des aktiven Materials entgegen. Durch die begrenzte Ausdehnung des aktiven Materials wird die Bildung einer Bleisulfatschicht zwischen dem Stromableiterblech und der aktiven Materialschicht verhindert oder zumindest wesentlich reduziert.

Der erfindungsgemäße Bleiakkumulator zeichnet sich somit durch geringe Spannungsverluste sowie eine hohe Stromkapazität aus, wobei dessen Elektroden mit geringem Aufwand herstellbar sind und auch einer unerwünschten Abkopplung zwischen dem Stromableiterblech und der darauf aufgetragenen aktiven Schicht entgegengewirkt wird.

Dabei ist es zweckmäßig, wenn die Andruckkraft in Kilopond zumindest das etwa Zweifache des Gesamtgewichts des Plattenblocks oder der Plattenblöcke des Bleiakkumulators in Kilogramm beträgt. Um dem Abkoppeleffekt möglichst wirksam und nachhaltig entgegenzuwirken, sollte die Andruckkraft in Kilopond vorzugsweise etwa dem 5 bis 20-fachen des Gesamtgewichts der Plattenblöcke betragen.

Um die von der Spannvorrichtung ausgeübte Andruckkraft möglichst flächig auf die Elektrodenbleche zu übertragen, ist es vorteilhaft, wenn die Spannvorrichtung zwei Andruckplatten hat, die mittels des Spannbandes oder der Spannbänder jeweils gegen eine der beiden gegenüberliegenden und etwa parallel zu den Elektroden-Flachseiten orientierten Gehäuse-Außenseiten des Batteriegehäuses gepresst sind. Dabei sieht eine bevorzugte Ausführungsform gemäß der Erfindung vor, daß die Andruckplatten derart in der Richtung zueinander vorzugsweise konkav vorgebogen sind, daß die im Batteriegehäuse-Inneren vorgesehenen Stromableiter im Bereich ihres Plattenzentrums vorgespannt sind. Die Stromableiterbleche werden somit durch die konkav vorgebogenen Andruckplatten zusätzlich im Bereich ihres Plattenzentrums vorgespannt.

Zweckmäßig ist es, wenn die beiden Enden jedes Spannbandes durch elektrische Punktschweißung oder durch Spannschlösser miteinander verbunden sind. Dabei sollte die Spannvorrichtung möglichst zumindest zwei Spannbänder aufweisen, um die Andruckkraft möglichst flächig auf die Plattenblöcke im inneren des Batteriegehäuses zu übertragen.

Eine weitere Ausführungsform gemäß der Erfindung sieht vor, daß die Andruckplatten als Metallplatten und/oder die Spannbänder als Metall- oder hochfeste Kunststoffbänder ausgebildet sind. Im Gegensatz zu dem elastischen und/oder thermoplastischen Batteriegehäuse der erfindungsgemäßen Speicherbatterie verformen sich metallene Andruckplatten auch unter einer starken Wärmeeinwirkung nicht und können daher die von der Spanneinrichtung ausgeübte Andruckkraft auch bei einer hohen Belastung der Batterie dauerhaft auf die Plattenblöcke übertragen.

Um die Spanneinrichtung an die aktuelle Ausdehnung des Batteriegehäuses anpassen und bedarfsweise auch nachträglich noch nachspannen zu können, ist es vorteihaft, wenn die Spannbänder mittels der Spannschlösser mechanisch verstellbar sind.

Der geringe Aufwand bei der Herstellung des erfindungsgemäßen Bleiakkumulators wird noch begünstigt, wenn der am Stromableiterblech der Elektroden vorgesehene Seitenrand einen trapez-, dreieckförmigen oder dergleichen sich zum freien Ende des Seitenrandes verjüngende Querschnittsform hat. Ein solches Stromableiterblech läßt sich auch im Bereich seines Seitenrandes gut und mit geringem Aufwand aus der verwendeten Gußform lösen.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform der Erfindung verwirklicht sein.

Es zeigt in unterschiedlichen Maßstäben und teilweise schematischer Darstellung:
- Fig. 1: das Batteriegehäuse eines Bleiakkumulators in einer Draufsicht, an dessen beiden gegenüberliegenden stirnseitigen Gehäuseaußenseiten jeweils eine Andruckplatte anliegt, wobei die Andruckplatten mittels einer Spannvorrichtung fest gegen das Batteriegehäuse gepreßt sind,
- Fig. 2: die Andruckplatten sowie die Spannvorrichtung aus Fig. 1 in einer perspektivischen Darstellung ohne das Batteriegehäuse,
- Fig. 3: das elastische Verhalten der in unbelastetem Zustand konkav zueinander vorgebogenen Andruckplatten nach dem Einbau der Plattenblöcke in die Zellengefäße des Batteriegehäuses,
- Fig. 4: das Stromableiterblech einer Elektrode, wobei das Stromableiterblech als Bleiblechgießling ausgebildet ist, welcher randseitig beidseits einen umlaufenden erhöhten Seitenrand hat,
- Fig. 5: das Stromableiterblech aus Fig. 4 in einem Querschnitt und
- Fig. 6: eine fertig vorbereitete Elektrodenplatte in einem vergrößerten Plattenausschnitt.

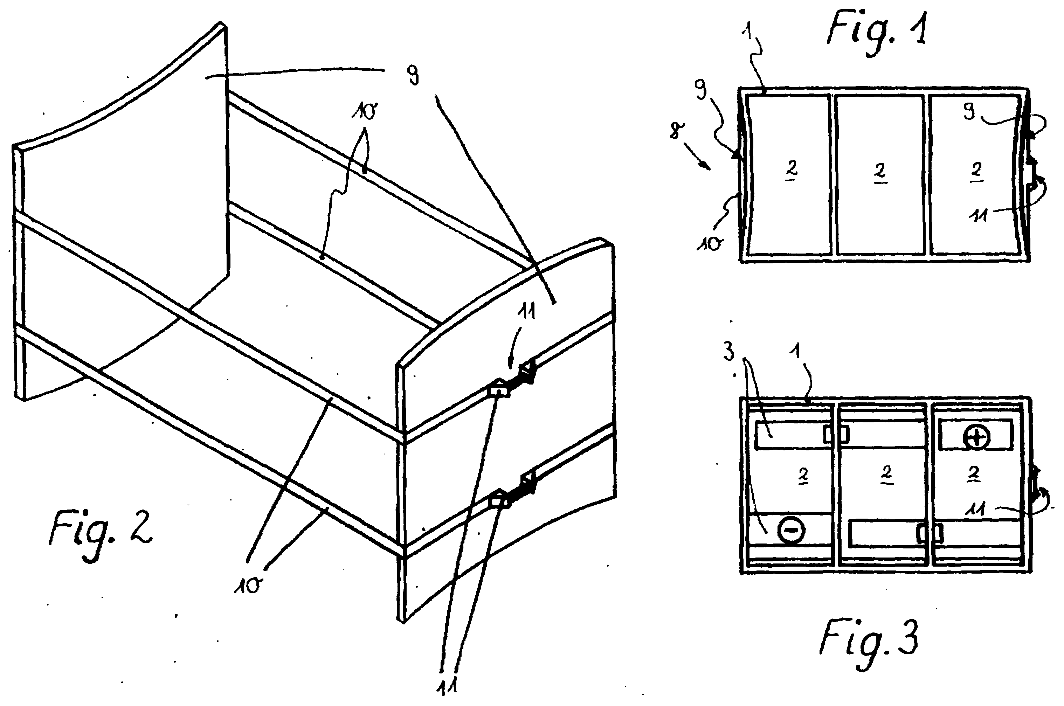

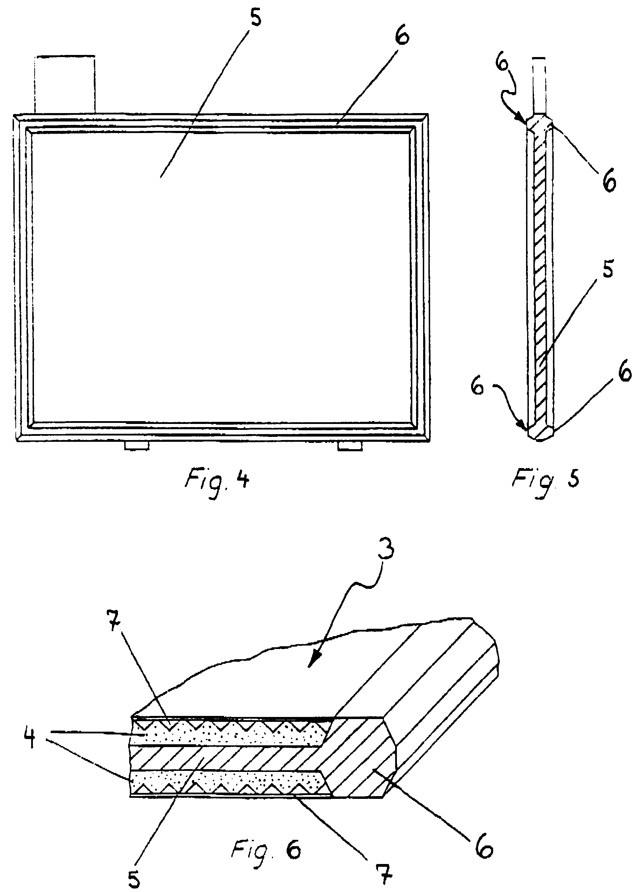

In den Fig. 1 und 3 ist das Batteriegehäuse 1 eines 6-Volt-Bleiakkumulators dargestellt. Das Batteriegehäuse 1 weist drei Zellengefäße 2 auf, in denen jeweils mehrere voneinander separierte und parallel geschaltete Elektroden 3 (vgl. Fig. 6) zu einem Plattenblock zusammengefasst sind. Die als Anoden dienenden Elektroden sind zumindest an einer ihrer beiden Flachseiten, vorzugsweise auf beiden Flachseiten, mit einem aktiven Material 4 beschichtet, daß als Paste aus Bleioxid bzw. Bleipulver sowie gegebenenfalls weiteren Zuschlagsstoffen und Schwefelsäure hergestellt und auf die Stromableiterbleche 5 der Elektroden 3 aufgetragen ist.

Wie aus den Fig. 4 bis 6 deutlich wird, weist jede der beschichteten Elektroden 3 des Bleiakkumulators ein plattenförmiges und mit Ausnahme eines erhöhten Seitenrandes 6 ebenes Bleiblech 5 als Stromableiter auf. Dieses plattenförmige ebene Stromableiterblech 5 wird auf einfache Weise aus einem Doppelgießling hergestellt, wobei der erhöhte Seitenrand 6 gleichzeitig mit dem Blechgießvorgang durchgeführt wird. Dieser Seitenrand 6 weist dazu einen trapezförmigen und zu seinem freien Ende hin verjüngenden Querschnitt auf, welcher sich leicht aus der Gießform lösen läßt. Statt eines trapezförmigen Querschnittes kann der Seitenrand beispielsweise auch einen dreieckförmigen oder kugelförmigen Querschnitt haben.

Der auf beiden Seiten des Stromableiterblechs 5 vorgesehene und randseitig umlaufende Seitenrand 6 dient zum Festlegen der Schichtdicke des aktiven Materials 4, wobei die Höhe des Seitenrandes 6 die Dicke der aufzutragenden Bleioxidpaste und die damit verbundene Menge des aktiven Materials bestimmt.

Die als Doppelgießling hergestellten Stromableiterbleche 5 können auch auf doppelseitig arbeitenden Pastiermaschinen, beispielsweise auf einer automatischen Bandpastiermaschine, mit der Bleioxid-Paste belegt werden. Danach werden dann die noch offenen Pastenfelder mit profilierten Faservliesen 7 abgedeckt.

Da das beschichtete Stromableiterblech der Elektroden keine Mittelrippen aufweist, wird der inaktive Volumenanteil des Bleiakkumulators reduziert und des auftragbare Volumen an aktivem Material wesentlich erhöht. Im Gegensatz zu vorbekannten und mit derartigen Mittelrippen ausgestatteten Elektrodenkonstruktionen kann auf das Elektrodenblech 5 des hier dargestellten Bleiakkumulators entweder mehr aktives Material aufgetragen oder mehr Säurevolumen eingesetzt werden, so daß dieser bei gleichem Plattenformat und gleicher Plattendicke eine wesentlich höhere Stromkapazität hat.

Das plattenförmige ebene Stromableiterblech 5 der beschichteten Elektroden zeichnet sich durch einen vergleichsweise geringen Spannungsabfall und eine hohe elektrische Güte aus, weil die Elektronen das plattenförmige Bleiblech 5 stets auf kürzestem Stromwege zum Elektrodenanschluß durchfließen können und nicht an bestimmte Gitterstrukturen gebunden sind. Durch das Fehlen von Mittelrippen und dergleichen Querschnittserweiterungen im zentralen Plattenbereich des Stromableiterbleches 5 der beschichteten Elektroden sind kurze Säurediffusionswege möglich, was die Hochstromkapazität des Bleiakkus begünstigt. Darüber hinaus kann das Gewicht des mit Ausnahme des erhöhten Seitenrandes 6 plattenförmigen ebenen Stromableiterbleches 5 vermindert, das Volumen des inaktiven Leitbleis reduziert und statt dessen wesentlich mehr aktives Material auf die beschichteten Elektroden aufgetragen werden. Durch ein solch zusätzlich aufgetragenes aktives Material 4 weist der Bleiakku eine vergleichsweise hohe Stromkapazität auf.

Nach dem Gießen des Stromableiterblechs 5 und dem Auftragen der aktiven Schicht 4 werden die noch offenen Pastenfelder in einem dritten Verfahrensschritt mit dem profiflierten Faservlies oder Kunststoffaserschicht 7 abgedeckt. Nach dem Curing-Prozeß können die Elektroden 3 dann weiterverarbeitet werden.

Die abwechselnd als Anode bzw. als Kathode ausgebildeten Elektroden 3 sind durch Separatoren elektrisch voneinander getrennt. Diese Separatoren halten die benachbarten Elektrodenplatten 3 unterschiedlicher Polarität in gleichem Abstand voneinander getrennt, erlauben aber beim Lade- und Entladevorgang die Benetzung der Elektrodenplatten 3 durch den Elektrolyten (verdünnte Schwefelsäure). Diese Separatoren übernehmen die notwendige Abstützung der aktiven Massefelder 4 und der Vliesabdeckung 7.

Um dem bei plattenförmigen Stromableiterblechen 5 ansonsten üblichen Abtrenneffekt entgegenzuwirken, bei dem sich zwischen dem leitenden Bleiblech 5 und der auf das Blech 5flächig aufgetragenen aktiven Materialschicht 4 eine Bleisulfatschicht als praktisch isolierende Schicht bildet, sind die den Zellengefäßen 2 zugeordneten Elektroden mittels einer Andruckkraft fest gegeneinander gepreßt, welche quer und möglichst rechtwinklig zu den Elektroden-Flachseiten wirkt. Dabei wird die Stabilität der Stromableiterbleche 5 durch den randseitig umlaufenden erhöhten Seitenrand 6 noch zusätzlich erhöht, so daß diese Bleibleche 5 auch einer hohen Andruckkraft gut standhalten können.

Diese Andruckkraft kann beispielsweise durch eine besondere Ausgestaltung des Batteriegehäuses erzeugt werden. Dazu sind beispielsweise als Hartgummikästen ausgebildete Batteriegehäuse gut geeignet. Solche Hartgummikästen haben jedoch teilweise dicke Zellenwände sowie großzügig dimensionierte Kastenverstärkungen, die die raumspezifische Energiedichte eines solchen Bleiakkumulators wesentlich vermindert.

Anstelle solcher Hartgummikästen könnte das Batteriegehäuse 1 auch aus Polypropylen oder aus einem anderen Kunststoff hergestellt werden. Ein aus Kunststoff hergestelltes Batteriegehäuse kann sich jedoch bei hohem Einbaudruck der Plattenblöcke so ausbauchen, daß die erwünschte Andruckkraft im Bereich der Plattenmitte nicht mehr vorhanden ist und sich die aktive Masse vom Stromableiterblech trennt. Werden dagegen die Außenwände des Batteriegehäuses 1 insbesondere im Stirnseitenbereich durch Verstärkungsrippen versteift, vermindert sich wiederum die raumspezifische Energiedichte und bei hohen Zellentemperaturen können sich auch die verstärkten Zellenwände ebenfalls ausbauchen, so daß die ursprünglich hohe Andruckkraft der Plattensätze verloren geht.

Die Andruckkraft wird daher bei der hier dargestellten bevorzugten Ausführungsform gemäß der Erfindung durch eine Spannvorrichtung 8 von außen aufgebracht, die dem hohen Einbaudruck der Plattenblöcke, dem Expansionsdruck der Elektrodenplatten und dem Volumenzuwachs durch Korrosion der Stromableiterbleche 5 am besten entgegenwirken kann. Dabei kann das Batteriegehäuse auch ohne weitere Verstärkungsrippen vergleichsweise dünnwandig ausgebildet werden, da die Spannvorrichtung 8 einem eventuellen korrosionsbedingten Volumenzuwachs der Plattenblöcke wirksam entgegenwirkt.

Die Spannvorrichtung 8 weist zwei Andruckplatten 9 auf, die mittels zweier Spannbänder 10 jeweils gegen eine der beiden gegenüberliegenden und etwa parallel zu den Elektroden-Flachseiten orientierten Gehäuse-Außenseiten des Batteriegehäuses 1 gepresst sind. Wie aus Fig. 2 deutlich wird, sind die Andruckplatten 9 derart in Richtung zueinander konkav vorgebogen, daß die im Batteriegehäuse-Inneren vorgesehenen Stromableiter 5 und Elektrodenbleche 3 im Bereich ihres Plattenzentrums vorgespannt sind. Dabei sind die Spannbänder 10 quer zur Vorformung der Andruckplatten 9 orientiert und laufen um das Batteriegehäuse 1 um.

Die Andruckplatten 9 werden aus Gewichtsgründen vorzugsweise aus Aluminiumsonderlegierungen hergestellt, die Zugfestigkeiten bis zu 65 kp/mm² aufweisen. Weiterhin können diese beiden Andruckplatten 9 noch zusätzlich durch eine eingeprägte Rippenstruktur verstärkt werden, so daß die Materialstärke der Andruckplatten 9 im Bereich von 2 mm gehalten werden kann.

Als Spannbänder 10 werden oberflächenveredelte Stahlbänder verwendet. Die beiden freien Enden der Spannbänder 10 werden jeweils durch ein verstellbares Spannschloß 11 miteinander verbunden. Solche verstellbaren Spannschlösser 11 bieten im Gegensatz zu Punktverschweißungen oder dergleichen hierbei die Möglichkeit einer gewissen Verstellbarkeit der Andruckkraft auch während der Betriebszeit des Bleiakkumulators. Bekanntlich wird nämlich im Laufe der Batterielebensdauer die metallische Leitbleimenge der positiven Platten in Bleidioxid umgewandelt. Bleidioxid hat gegenüber metallischem Blei ein 1,39fach höheres Molvolumen. Diese Volumenänderungen führen zu einem hohen Druck in den Zellen. Die Folge davon ist, daß die aktive Masse 4 in den angrenzenden Separator hineinwächst und den Freiraum zwischen den einzelnen Separatorrippen verengt. Bei etwa einstündiger Entladung wird der Säurezutritt zu den Elektrodenplatten 3 erschwert. Um diesen Nachteil zu vermeiden, kann es erforderlich werden, die Andruckkraft durch Öffnen der Spannschlösser 11 auf den Anfangswert zu reduzieren.

Damit sich das Batteriegehäuse 1 gut an die korrosions- und/oder betriebsbedingte Volumenänderung der Elektrodenplatten anpassen kann, ist das Batteriegehäuse 1 aus einem elastischen Material, vorzugsweise aus einem thermoplastischen Kunststoff wie beispielsweise Polypropylen, hergestellt.

Die quer zur Plattenebene der Elektroden 3 wirksame Andruckkraft wirkt einer den Abkoppeleffekt begünstigenden Ausdehnung des aktiven Materials 4 entgegen. Durch die begrenzte Ausdehnung des aktiven Materials wird die Bildung einer Bleisulfatschicht zwischen dem Stromableiterblech 5 und der aktiven Materialschicht 4 einer beschichteten Elektrode verhindert oder zumindest wesentlich reduziert.

Der hier beschriebene Bleiakkumulator zeichnet sich somit durch geringe Spannungsverluste sowie eine hohe Stromkapazität aus, wobei dessen Elektroden mit geringem Aufwand herstellbar sind und einer unerwünschten Abkoppelung zwischen dem Stromableiterblech 5 und der darauf aufgetragenen aktiven Schicht 4 entgegengewirkt wird.

## Patentansprüche

1. Bleiakkumulator mit einem Batteriegehäuse (1), welches in seinem Gehäuseinneren in mehrere Zellengefäße (2) unterteilt ist, in denen jeweils wenigstens zwei voneinander separierte Elektroden (3) vorgesehen sind, von denen mindestens eine an zumindest einer ihrer beiden Flachseiten mit aktivem Material (4) beschichtet ist, wobei wenigstens eine der beschichteten Elektroden (3) ein plattenförmiges ebenes Bleiblech (5) als Stromableiter aufweist, welches zum Festlegen der Schichtdicke des aktiven Materials einen entsprechend erhöhten Seitenrand (6) hat und wobei die einem Zellengefäß (2) zugeordneten Elektroden (3) mittels einer Andruckkraft fest gegeneinander gepreßt sind, welche quer zu den Elektroden-Flachseiten wirkt und zum Aufbringen der Andruckkraft eine Spannvorrichtung (8) vorgesehen ist, **dadurch gekennzeichnet**, daß die Spannvorrichtung (8) wenigstens ein Spannband (10) hat, das das Batteriegehäuse (1) außenseitig umgreift.

2. Bleiakkumulator nach Anspruch 1, dadurch gekennzeichnet, daß die Andruckkraft in kp zumindest das etwa zweifache des Gesamtgewichts des Plattenblocks oder der Plattenblöcke des Bleiakkumulators in kg beträgt.

3. Bleiakkumulator nach Anspruch 1 oder 2, dadurch gekennzeichnet, daß die Spannvorrichtung (8) zwei Andruckplatten (9) aufweist, die mittels des Spannbandes (10) oder der Spannbänder jeweils gegen eine der beiden gegenüberliegenden und etwa parallel zu den Elektroden-Flachseiten orientierten Gehäuse-Außenseiten des Batteriegehäuses (1) gepreßt sind.

4. Bleiakkumulator nach einem der Ansprüche 1 bis 3, dadurch gekennzeichnet, daß die Andruckplatten (9) derart in Richtung zueinander vorzugsweise konkav vorgebogen sind, daß die im Batteriegehäuse-Inneren vorgesehenen Stromableiter im Bereich ihres Plattenzentrums vorgespannt sind.

5. Bleiakkumulator nach einem der Ansprüche 1 bis 4, dadurch gekennzeichnet, daß die beiden Enden jedes Spannbandes (10) durch elektrische Punktschweißung oder durch Spannschlösser (11) miteinander verbunden sind.

6. Bleiakkumulator nach einem der Ansprüche 1 bis 5, dadurch gekennzeichnet, daß die Andruckplatten (9) als Metallplatten und/oder die Spannbänder (10) als Metall- oder hochfeste Kunststoffbänder ausgebildet sind.

7. Bleiakkumulator nach einem der Ansprüche 1 bis 6, dadurch gekennzeichnet, daß die Spannbänder (10) mittels der Spannschlösser (11) mechanisch verstellbar sind.

8. Bleiakkumulator nach einem der Ansprüche 1 bis 7, dadurch gekennzeichnet, daß der erhöhte Seitenrand (6) des Stromableiterbleches (5) oder der Stromableiterbleche eine trapez- oder dreieckförmige oder dergleichen sich zum freien Ende des Seitenrandes (6) verjüngende Querschnittsform aufweist.

## Claims

1. Lead accumulator with a battery casing (1) with its interior subdivided into several cells (2) each designed to take at least two separate electrodes (3) of which at least one is coated with active material (4) on at least one of its two flat sides while at least one of the coated electrodes (3) has a plane lead plate (5) as conductor with an elevated edge to determine the layer thickness of the active material (6). The electrodes (3) of a cell (2) are tightly pressed together by a pressing force acting crosswise to the flat sides of the electrode. To apply this force, the battery is designed with a clamping device characterised by the fact that the clamping device (8) has at least one tensioning belt (10) surrounding the exterior of the battery casing (1).

2. Lead accumulator according to claim 1, characterized by the fact that the pressing force, given in kp, is at least about twice the total weight of the plate block or of the plate blocks of the lead accumulator, given in kg.

3. Lead accumulator according to claim 1 or 2, characterized by the fact that die clamping device (8) has two pressing plates (9) which are pressed to one of the opposite exterior sides of the battery casing (1)that run about parallel to the flat sides of the electrode

4. Lead accumulator according to at least one of claims 1 to 3 characterized by the fact that the pressing plates (9) are bent towards each other in a preferably concave curve so that the conductors designed for the interior of the battery casing are pre-tensioned in their center.

5. Lead accumulator according to at least one of claims 1 to 4 characterized by the fact that both ends of each tensioning belt (10) are linked together by electric spot welding or by tension sleeves (11).

6. Lead accumulator according to at least one of claims 1 to 5 characterized by the fact that the pressing plates (9) are metal plates and/or that the tensioning belts (10) are metal or supertight plastic belts.

7. Lead accumulator according to at least one of the claims 1 to 6 characterized by the fact that the tensioning belts (10) are mechanically adjustable due to tension sleeves (11).

8. Lead accumulator according to at least one of the claims 1 to 7 characterized by the fact that the elevated edge (6) of the conductor sheet (5) or the conductor sheets has a trapezoidal, triangular or similar shape, narrowing to the free end of the edge (6) in its cross-section.

## Revendications

1. Accumulateur au plomb comportant un boîtier de batterie (1) dont l'intérieur est divisé en plusieurs cuves de cellules (2) contenant chacune au moins deux électrodes (3) séparées les unes des autres, dont au moins une est révêtue sur au moins une de ses faces planes d'un matériau actif (4), et dont l'une au moins des électrodes révêtues (3) présente une tôle de plomb plane (5) servant de conducteur, et pourvue d'une bordure (6) surélevée (6) permettant de déterminer l'épaisseur de la couche de matériau actif et dont les électrodes (3) associées à une cuve de cellule (2) sont pressées l'une contre l'autre par une force de pression appliquée perpendiculairement à la face plane de l'électrode et pour l'application de laquelle un dispositif de pression (8) est prévu, caractérisé en ce que le dispositif de pression (8) dispose d'au moins une bande de traction (10) qui entoure l'extérieur du boîtier de batterie (1).

2. Accumulateur au plomb selon la revendication 1, caractérisé en ce que la force de pression mesurée en kp équivaut au moins au double du poids total du ou des blocs de plaques de l'accumulateur au plomb, exprimé en kg.

3. Accumulateur au plomb selon les revendications 1 ou 2, caractérisé en ce que le dispositif de pression (8) présente deux plaques de pression (9) qui sont pressées à l'aide d'une ou de plusieurs bandes de traction (10) contre l'une des deux faces externes du boîtier de la batterie (1) situées face et orientées à peu près parallèlement à la partie plane des électrodes.

4. Accumulateur au plomb selon l'une des revendications 1 à 3, caractérisé en ce que les plaques de pression (9) sont incurvées préférentiellement de manière concave l'une en direction de l'autre, de telle sorte que les conducteurs prévus à l'intérieur du boîtier de la batterie soient précontraints dans leur zone centrale.

5. Accumulateur au plomb selon l'une des revendication 1 à 4, caractérisé en ce que les deux extrémités de chaque bande de traction (10) sont reliées par une soudure électrique par points ou par un tendeur (11).

6. Accumulateur au plomb selon l'une des revendications 1 à 5, caractérisé en ce que les plaques de pression (9) sont constituées de plaques métalliques et/ou que les bandes de traction (10) sont constituées de bandes métallique ou de bandes synthétiques à forte capacité.

7. Accumulateur au plomb selon l'une des revendications 1 à 6, caractérisé en ce que les bandes de traction (10) sont réglables mécaniquement à l'aide du tendeur (11).

8. Accumulateur au plomb selon l'une des revendications 1 à 7, caractérisé en ce que la bordure surélevée (6) de la tôle conductrice (5) ou que la tôle conductrice présente une section amincie trapézoïdale, triangulaire ou similaire du côté libre de la bordure (6).
